# EUROPEAN PATENT SPECIFICATION

(11) **EP 4 325 667 B1**
(45) Date of publication and mention of the grant of the patent: **30.04.2025**
(21) Application number: 22190712.4
(22) Date of filing: 17.08.2022
(51) Int. Cl.: H01R 4/64, B60R 16/00, H02G 3/00

(54) **GROUNDING DEVICE FOR A VEHICLE**
ERDUNGSVORRICHTUNG FÜR EIN FAHRZEUG
DISPOSITIF DE MISE À LA TERRE POUR UN VÉHICULE

(43) Date of publication of application: 21.02.2024
(73) Proprietor: Volvo Car Corporation, 405 31 Göteborg (SE)
(72) Inventor: ORBAY, Raik, Göteborg (SE); ANDERSSON, Ida, Göteborg (SE); BRATT, Magnus, Göteborg (SE); EKELUND, Catarina, Göteborg (SE); HÄGG, Rasmus, Göteborg (SE)
(74) Representative: Maiwald GmbH

(56) References cited:
- WO-A1-2015/183133
- US-A- 5 491 892
- US-A1- 2009 272 570
- US-A1- 2010 319 989
- US-A1- 2019 101 177
- US-A1- 2021 351 535
- ERICO -: "Flexible Conductors Solutions to Optimize the Design of Electrical Power & Ground Connections (North America)", 25 June 2016 (2016-06-25), XP055731649, Retrieved from the Internet <URL:https://web.archive.org/web/20160625154621if_/https://www.erico.com/catalog/literature/P1224C-NAEN.pdf> [retrieved on 20200917]

## Description

### TECHNICAL FIELD

The present disclosure relates to a grounding device for electrically connecting at least two components of a vehicle, a vehicle, and a use of a grounding device for a vehicle.

### BACKGROUND ART

The number of electronic devices, components etc. in vehicles and their frequency span have increased, resulting in that electromagnetic compatibility in vehicles becoming more and more important. Thus, several electromagnetic interference measures have been taken to secure a vehicle's performance, such as ground circuits, systems and/or component designs to attenuate certain frequencies, heavy ferrites for suppressing electromagnetic interference (EMI), random pulse width modulation, random pulse position modulation, attenuating materials in the body-in-white (BIW), and/or slip rings in electric motors.

Presently used grounding components, device etc. are usually based on arbitrarily shaped braids, and therefore have lifetime issues; because braids are prone to wear, tear, rupture and/or corrosion. Such components are disclosed in US 5 491 892 A and US 2010/319989 A1.

### SUMMARY

There may, therefore, be a need to provide an improved grounding device for a vehicle, particularly a grounding device having an increased lifetime and/or having an improved resistance to mechanical loads and/or environmental influences.

The object of the present disclosure is at least partially solved or alleviated by the subject-matter of the appended independent claims, wherein further embodiments are incorporated in the dependent claims.

According to a first aspect, there is provided a grounding device for electrically connecting at least two components of a vehicle. The grounding device according to claim 1, wherein the grounding device comprises: a conducting means and two contact elements. The conducting means comprises at least one flat braided wire assembly configured to conduct high frequency current, particularly surface currents. A first contact element of the two contact elements is arranged at a first axial end of the conducting means and a second contact element of the two contact elements is arranged at a second, particularly opposite, axial end of the conducting means. Further, the first contact element is configured to be attached to a first component of the vehicle, and the second contact element is configured to be attached to a second, particularly separate, component of the vehicle. The conducting means is formed at least partly as a spring element configured to provide an elastic expansion and/or an elastic compression in at least two dimensions, e.g., in the axial direction of the spring element as well as in an oblique direction thereof.

In other words, the grounding device is like a connecting device for electrically connecting at least two components of a vehicle, and in particular, for providing a low impedance current path between at least two components of the vehicle, wherein the components are separate from each other, e.g., a housing of an electric motor of the vehicle as a first component and a vehicle subframe as a second component. The flat braided wire assembly in the conducting means allows conducting high frequency current, and thus fulfils alternate current (AC) grounding needs. The high frequency current includes surface current, which may vary dependent on upstream geometries, materials, gaps and/or additional capacitances and/or inductances, particularly of the flat braid wire assembly.

By forming the conducting means at least partly as a spring element, the resistance of the grounding device, and particularly of the flat braid wire assembly, to mechanical loads is improved. In detail, the spring-like form is a stable form while still providing elastic expansion and/or elastic compression of the conducting means in at least two dimensions. This means that the spring element is elastically expandable and/or compressible without being twisted, and particularly, without twisting spring turns. Therefore, the spring-like form allows preventing the flat braid wire assembly from being twisted and/or looped due to mechanical loads. In other words, the spring element allows protecting the flat braid wire assembly from critical mechanical loads, e.g., loads leading to looping of the flat braid wire assembly, thereby prolonging the lifetime of the flat braid wire assembly, particularly compared to known flat braid wire assemblies having a tape-like, flexible or erratically changing shape under loads.

The contact elements are configured to connect the conducting means with the at least two vehicle components. Such connection includes various connecting mechanisms, such as a bolt connection, a clamp connection etc., as well as a contacting connection, in which the contact elements only contact the components, respectively, while the conducting means is in a predetermined, particularly biased or compressed state, thereby pushing the contact elements into contact with the components, respectively, even while the components are vibrating and/or moving relative to each other. Further, the contact elements are configured to ensure a low impedance path for surface currents between the conducting means and the respective component. A groove being provided on each vehicle component and configured to accommodate or hold at least the respective contact element of the grounding device may also help in establishing such a secure, low impedance surface current path.

According to an example, the spring element may be formed as a wave spring or a compression spring, particularly a coil spring. Wave springs as well as coil springs may allow being expanded and/or compressed in at least two dimensions. Compression springs are usually formed from substantially round or oval spring steel wire and available in substantially all possible sizes.

Since compression springs are very common, they are usually manufactured in large quantities and therefore, low cost. Wave springs are already used in various suspension systems and are capable to provide sufficient flexibility to ensure contact to the moving and/or vibrating components. Wave springs are usually made of wound flat wire and the spring effect is based on the incorporated waves. Further, wave springs may allow a reduced installation height, particularly up to 50% compared to conventional compression springs for static to medium dynamic applications. In other words, due to their configuration, wave springs may be able to generate the same force as a compression spring, but with a reduced installation height. Thus, from a packaging point of view, providing the same characteristics while needing a reduced installation height may be advantageous, since such spring may allow a reduced installation space. Additionally, the in-built shape of the wave spring may prevent the usually unintendingly or arbitrarily formed electromagnetic compatibility (EMC) couplings, such as the flat braid wire assembly, from bending, from wear by rubbing to other components or itself, and/or from wear by scraping. Furthermore, the wave spring may have a wider tolerance for packaging, particularly into a vehicle, and therefore, may allow using the same size of wave spring for various, particularly substantially all, connections of at least two components of the vehicle. In other words, the wave spring may be a "one-fits-all"-spring element, providing a cost-efficient, thus economical, grounding device. Additionally, as the wave springs provide a stable, predetermined or fixed shape, they may be connected in series, as well as parallel as allowed by the EMC and grounding dimensioning and/or depending on the assembly requirements.

According to an example, the connecting body may further comprise a coating enclosing the conducting means, the coating being configured to protect the conducting means from environmental influences, such as pollutants in air, water, moisture, etc. thereby contributing to a galvanic insulation of the flat brad wire assembly.

The conducting means may be located inside the coating, such that the coating may protect the conducting means from environmental influences. Thus, the coating may prevent the conducting means, and particularly the flat braid wire assembly from corroding due to environmental influences, and thereby further increasing (prolonging) the lifetime of the conducting means. The prolonged lifetime may assure high quality EMC compatibility and reduce servicing costs for the end user, supporting a circular economy for transport electrification. Further, the coating may reduce inter-wave wear for the spring element.

According to an example, the coating may further enclose a sacrificial anode, e.g., made of zinc, which may be configured to prevent corrosion, particularly galvanic corrosion of the conducting means.

The sacrificial anode, or galvanic anode, may be made of a base metal, that is, a metal or a metal alloy having a more negative reduction potential and a more positive electrode potential, respectively, than the metal material of the flat braid wire assembly. The difference in potential between the metals of the sacrificial anode and the flat brad wire assembly means that the sacrificial anode corrodes instead of the flat braid wire assembly. Thus, by integrating a sacrificial anode, the conducting means, particularly the flat braid wire assembly, may be protected from galvanic corrosion.

According to an example, the coating may be formed of a metal, particularly of spring steel, or a metal alloy. According to an example, the coating may be formed of a plastic, particularly of a reinforced plastic.

Metal, particularly spring steel, may result in good spring characteristics, wherein plastics may provide an insulating effect.

According to an example, the contact elements may be formed as separate elements, e.g., eyelets, exposed braid strands, pressed & sintered braid strands, and may be conductively connected to the conducting means for minimizing the contact electrical resistance. According to an example, the contact elements may be integrally formed with the conducting means.

The separate contact elements may be stiff and made of a robust material. The contact elements integrally formed with the conducting means, may be part of the conducting means, particularly of the flat braid wire assembly to allow for the surface currents to flow the low impedance path through the conducting means from one component to the other component of the vehicle. The choice of the contact element being separately or integrally formed with the conducting means may depend on the application, that is, it may depend on the number, location and/or type of components to be connected by the grounding device. These components may be formed as connected elements, e.g., eyelets, exposed braid strands, pressed & sintered braid strands, precious metal contact at braid strand tips, punched braid strands, etc.

According to an example, the contact elements may be a spring turn configured to be positioned in a recess, such as a groove, being formed on the first and/or the second component of the vehicle. This may reduce the manufacturing costs and/or the weight of the grounding device, particularly compared to using separate contact elements, such as two bolts and washer at each side of the conducting means.

By positioning the contact elements in a recess, the grounding device, particularly the conducting means may be arranged in a biased or compressed state, and the recess, such as a groove, may prevent the grounding device from moving relative to a contact surface of the component due to the component's movement and/or vibration. Such compressed configuration may also assure a low impedance path from the conducting means to the vehicle component. The contact surface may be a surface of the component comprising the recess and being in contact with one contact element of the grounding device, in an assembled state.

According to an example, the contact elements may be configured to be removably connected to at least one fixture of the first and/or the second component. A removable connection, or a detachable connection, may allow replacing the contact element and/or the grounding device in case of failure, such as excessive wear, corrosion, etc. The fixture may be formed as the recess. Alternatively, the fixture may be a device being casted onto the component, configured to hold the contact element in place, e.g., a mounting bracket etc.

According to an example, the grounding device may further comprise at least a solid metal part configured to conduct low frequency current. The solid metal part may allow conducting low frequency current, and thus fulfils direct current (DC) grounding needs. Since the flat braid wire assembly may allow conducting high frequency current, particularly better than single strand wire, the solid metal part may allow additionally conducting low frequency current, thereby enabling the grounding device to conduct both, high frequency current and low frequency current. In other words, such grounding device combines the function of conducting low frequency current and high frequency current in one device.

According to an example, the solid metal part may be formed as a second spring element configured to provide an elastic expansion and/or an elastic compression in at least two dimensions, e.g., the axial direction of the spring element as well as in an oblique direction thereof. Thus, the grounding device may comprise a two-spring-aggregation, the one spring element being configured to conduct the high frequency current, and the other spring element being configured to conduct the low frequency current. Such grounding device may not need to compromise on a material which may allow conducting both, high frequency current and low frequency current, but may provide one spring element being adapted, particularly tailored, to conduct the high frequency current effectively and efficiently, and one spring element being adapted, particularly tailored, to effectively and efficiently conduct the low frequency current. According to an example, the second current path may be formed as a solid wire.

According to an example, the second spring element may be formed as a wave spring or a compression spring, particularly a coil spring. Wave springs as well as coil springs may allow being expanded and/or compressed in at least two dimensions. Compression springs are usually formed from substantially round or oval spring steel wire and available in substantially all possible sizes.

Since compression springs are very common, they are usually manufactured in large quantities and therefore, low cost. Wave springs are already used in various suspension systems and are capable to provide sufficient flexibility to ensure contact to the moving and/or vibrating components. Wave springs are usually made of wound flat wire and the spring effect is based on the incorporated waves. Further, wave springs may allow a reduced installation height, particularly up to 50% compared to conventional compression springs for static to medium dynamic applications. In other words, due to their configuration, wave springs may be able to generate the same force as a compression spring, but with a reduced installation height. Additionally, the in-built shape of the wave spring may prevent the arbitrarily or alternatively shaped electromagnetic compatibility (EMC) couplings, such as the flat braid wire assembly, from bending, from wear by rubbing to other components or itself, and/or from wear by scraping.

According to a second aspect, there is provided a vehicle, comprising: at least a first component and a second component, and a grounding device according to the first aspect, the grounding device being configured to provide a conductive path, particularly at least a low impedance path, between at least the first component and the second component.

Therefore, the grounding device allows conductively connecting at least the first component and the second component, and increases the lifetime of such connection, in particular in view of conducting high frequency current. Further, the grounding device may be able to additionally conduct low frequency current.

According to a third aspect, there is provided a use of the grounding device according to the first aspect for providing a conductive path between at least a first component and a second component of a vehicle, the conductive path being configured to conduct high frequency current.

The resistance of the grounding device, and particularly of the flat braid wire assembly, to mechanical loads is improved. In detail, the spring-like form provides elastic expansion and/or elastic compression of the conducting means in at least two dimensions without twisting the spring element, and particularly, spring turns. Therefore, the spring-like form allows preventing the flat braid wire assembly, which allows conducting the high frequency current, from being twisted and/or looped due to mechanical loads. In other words, the grounding device, and in particularly the spring element, allows protecting the flat braid wire assembly from critical mechanical loads, e.g., loads leading to looping of the flat braid wire assembly, thereby prolonging the lifetime of the flat braid wire assembly.

It should be noted that the above examples may be combined with each other irrespective of the aspect involved.

These and other aspects of the present disclosure will become apparent from and elucidated with reference to the embodiments described hereinafter.

### BRIEF DESCRIPTION OF DRAWINGS

Exemplary embodiments of the disclosure will be described in the following with reference to the following drawings. Figures are for illustration purposes and are not to scale.
- Fig. 1A: shows a schematic block diagram of two components of a vehicle being connected by an exemplary grounding device.
- Fig. 1B: shows a schematic block diagram of three components of a vehicle being connected by an exemplary grounding device.
- Fig. 2: shows a schematic view of an exemplary grounding device.
- Fig. 3: shows a schematic view of an exemplary grounding device.
- Fig. 4A: shows a schematic exemplary cross-sectional view of the grounding device in Fig. 3.
- Fig. 4B: shows a schematic exemplary cross-sectional view of the grounding device in Fig. 3.
- Fig. 5: shows a schematic view of an exemplary grounding device.
- Fig. 6: shows a schematic view of an exemplary fixture holding a grounding device.
- Fig. 7A: shows a schematic, perspective view of an exemplary fixture holding a grounding device.
- Fig. 7B: shows a schematic, perspective view of an exemplary fixture holding a grounding device

The figures are merely schematic representations and serve only to illustrate embodiments of the disclosure. Identical or equivalent elements are in principle provided with the same reference signs.

### DESCRIPTION OF EXAMPLES

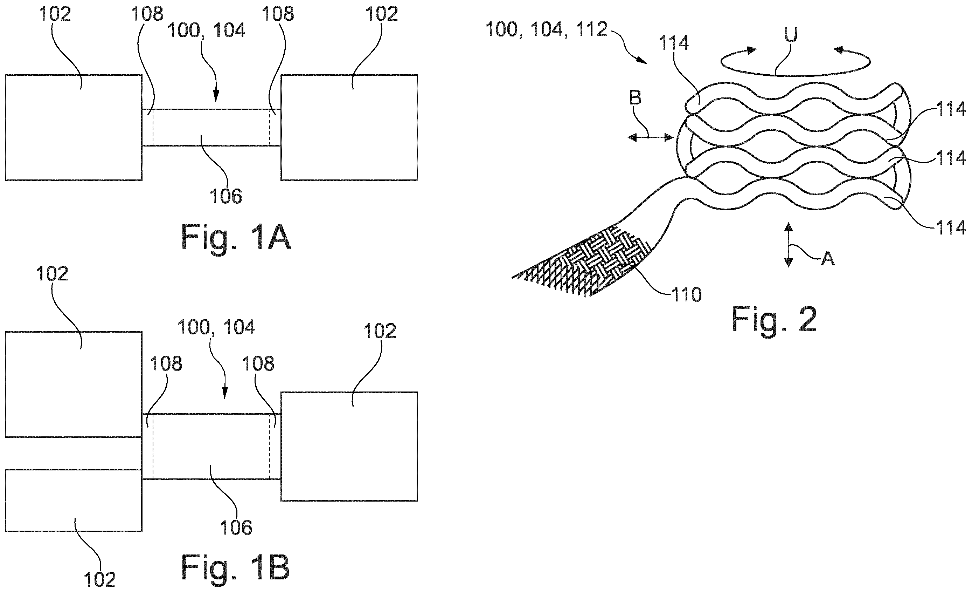

Figures 1A and 1B shows a schematic block diagram of an example of a grounding device 100 electrically connecting two components 102 (Fig 1A) and three components 102 (Fig. 1B), respectively, of a vehicle (not shown). The components 102 may be electric components or may comprise at least an electric part. The grounding device 100 is configured to electrically and/or galvanically connect the components 102 to form a grounding circuit, and thereby reduce and/or substantially eliminate the electromagnetic interference (EMI) and thus fulfilling the requirements regarding electromagnetic compatibility (EMC) in a vehicle.

The grounding device 100 comprises a conducting means 106 and two contact elements 108. The conducting means 106 and the contact elements 108 may be integrally formed or separately formed. Each of the contact elements 108 is in contact with at least one component 102. The conducting means 106 is configured to conduct at least high frequency current, and therefore comprises a flat braid wire assembly 110 (e.g., see Figure 2). The flat braid wire assembly 110 comprises at least one, preferably two, three, four or more, flat braid wires.

During operation, e.g., while the vehicle is driven, the components 102 may move and/or vibrate, particularly relative to each other so that the grounding device 100 needs to be flexible enough to compensate such movements and/or vibrations without losing contact to the components 102.

Figures 2, 3 and 5 show schematic views of an exemplary grounding device 100, in which the conducting means 106 and the contact elements 108 are integrally formed as a wave spring 112. The wave spring 112 is formed of wound flat wire(s) which is/are formed in wave along a circumferential direction U. The wave spring 112 allows elastic expansion and/or compression in at least two dimensions, e.g., in the axial direction A and in an oblique direction thereof, e.g., such that the wave spring 112 is bend and/or compressed in a direction B substantially orthogonal to the direction A.

In the example shown in Figure 2, the wave spring 112 comprises four spring turns 114, and is substantially formed of the flat braid wire assembly 110. The flat braid wire assembly 110 is configured to conduct high frequency current. However, the flat braid wire assembly 110 is prone to mechanical loads, and in particular, to twisting loads. The particularly pre-determined or characteristic and stable form of the wave spring 112 prevents the flat braid wire assembly 110 from being twisted, thereby increasing lifetime of the flat braid wire assembly 110.

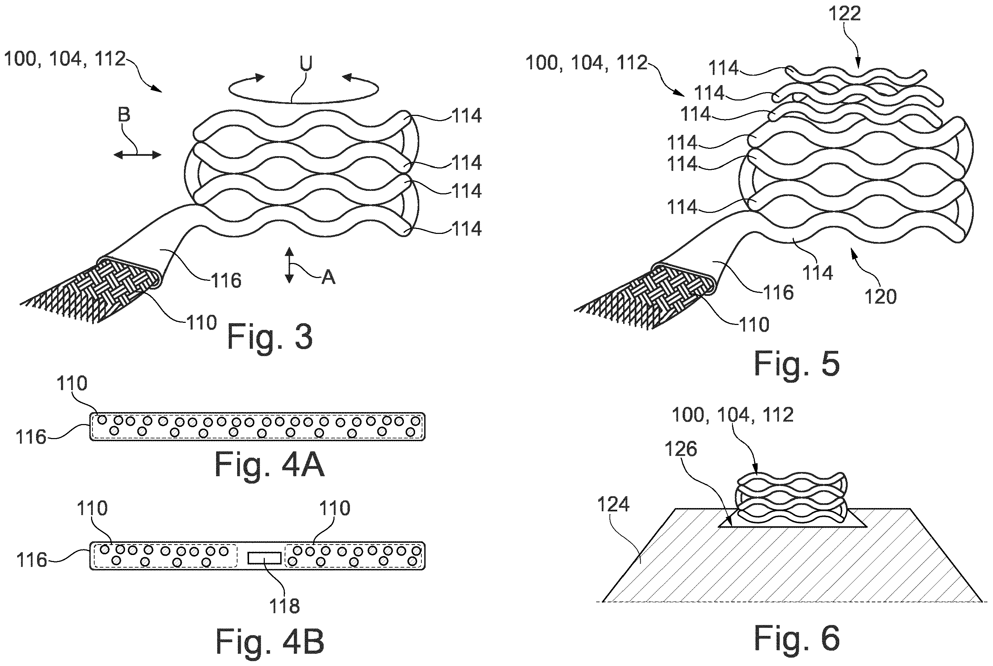

In the example shown in Figure 3, the wave spring 112 comprises four spring turns 114, and is substantially formed of the flat braid wire assembly 110, which is enclosed by a coating 116. The coating 116 may be made of a metal or a metal alloy, such as spring steel, or may be made of a plastic, such as a reinforced plastic. The coating 116 encloses the flat braid wire assembly 110 entirely (see also Figures 4A and 4B), thereby protecting the flat braid wire assembly 110 from external and/or environmental influences, such as water, dust, air etc. In other words, the coating protects the flat braid wire assembly 110 from the environmental influences and therefore, prevents the flat braid wire assembly 110 from corroding. Further, as exemplary shown in Figure 4B, a sacrificial anode 118 may be enclosed by the coating, thereby reducing, or eliminating the galvanic corrosion, which may occur, particularly in case, the coating is made of metal or metal alloy.

The example shown in Figure 5 substantially corresponds to the example shown in Figure 3, except that the wave spring 112 comprises seven spring turns, which have different diameters, such that the wave spring 112 has a cone-like configuration. Such a cone-like formed wave spring 112 may be used for connecting three components 102 (see Fig. 1B), two of which are arranged on the same side of the grounding device 100 and in contact with a large base 120 of the wave spring 112 and one of which is arranged on another, particularly opposite, side of the grounding device 100 and in contact with the "tip" 122 of the cone-like wave spring 112. Although not shown in the Figures, it is possible that the wave spring may have other diameter-variable shapes, such as hourglass-shaped, in which the "tips" of two cones are contacting each other, or a shape having smaller diameters at the axial ends of the wave spring than in the center of the wave spring etc.

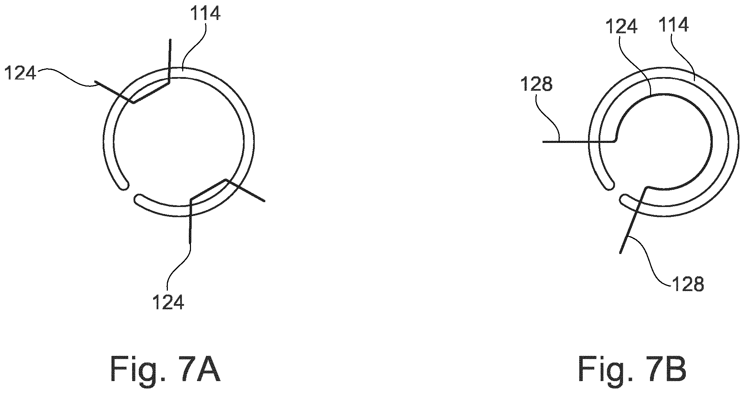

Figure 6 shows a schematic, cross-sectional view of an example of a fixture 124 holding the grounding device 100. The fixture 124 may be casted onto the respective component 102 and provides a groove 126 for accommodating one contact element 108 of the grounding device 100, wherein the contact element 108 is formed as a spring turn 114 of the wave spring 112. The groove 126 has a protruding rim 130, which protrudes towards the contact element 108, when being placed in the groove 126, preventing the contact element 108 from easily falling out of the groove 126. The rim 130 may be sectionally formed, particularly as clamp-like or bracket-like fixtures (see Fig. 7A). Alternatively, the rim 130 may be at least partly formed along the circumference of the groove 126, e.g., as shown in Fig. 7B, particularly to aid in assuring the needed contact area for surface currents.

Figures 7A and 7B each shows a schematic, perspective view of an example of a fixture 124 holding the grounding device 100. The contact element 108 is formed as a spring turn 114 or an outer wave of the wave spring 112, which is placed in the groove 126 (see Fig. 6) formed in the component 102. Further the spring turn 114 is fixed/hold in the groove 126 by two clamp-like or bracket-like fixtures 124 (see Figure 7A) providing an easy-fit low impedance connection between the spring turn 114 and the respective component 102.

Alternatively, as shown in Figure 7B, the spring turn 114 is hold in the groove 126 by one bracket-like fixture 124, which is formed at least partly circular having legs 128 at respective two ends of the open circle crossing the spring turn and thereby providing a low impedance path between the component 102 and the spring turn 114. The rim 130 and/or the bracket- or clamp-like fixtures 124 may assure a conductive connection between the contact elements 108 and the respective component 102 to provide the low impedance path between the contact elements 108 and the respective component 102.

### LIST OF REFERENCE SIGNS

- 100: grounding device
- 102: component
- 106: first conducting member
- 108: contact element
- 110: flat braid wire assembly
- 112: wave spring
- 114: spring turn
- 116: coating
- 118: sacrificial anode
- 120: base
- 122: tip
- 124: fixture
- 126: groove
- 128: leg
- 130: rim

- A: axial direction
- B: direction
- U: circumferential direction

## Claims

1. A grounding device for (100) a vehicle, comprising:
a conducting means (106) and two contact elements (108),
a first contact element of the two contact elements (108) being arranged at a first axial end of the conducting means (106) and a second contact element of the two contact elements (108) being arranged at a second axial end of the conducting means (106),
the first contact element further being configured to be attached to a first component (102) of the vehicle, and the second contact element further being configured to be attached to a second component (102) of the vehicle,
wherein
the conducting means (106) comprises at least one flat braided wire assembly (110) configured to conduct high frequency currents; **characterised in that**
the flat braided wire assembly (110) of the conducting means (106) is formed at least partly as a spring element having spring turns, the spring element being in a stable form configured to provide an elastic expansion and an elastic compression in at least two dimensions while preventing the flat braid wire assembly from being twisted and looped due to mechanical loads.

2. The grounding device (100) according to claim 1, the spring element being formed as a wave spring (112).

3. The grounding device (100) according to claim 1 or 2, further comprising a coating (116) enclosing the conducting means (106), the coating (116) being configured to protect the conducting means (116) from environmental influences, such as air, water, etc.

4. The grounding device (100) according to claim 3, the coating (116) further enclosing a sacrificial anode (118) being configured to prevent corrosion of the conducting means (106).

5. The grounding device (100) according to claim 3 or 4, the coating (116) being formed of at least a metal, or metal alloys.

6. The grounding device (100) according to claim 3 or 4, the coating (116) being formed of a plastic.

7. The grounding device (100) according to any of the preceding claims, the contact elements (108) being separate elements and being conductively connected to the conducting means (106).

8. The grounding device (100) according to any of claims 1 to 6, the contact elements (108) being integrally formed with the conducting means (106).

9. The grounding device (100) according to claim 8, the contact elements (108) being one of the
spring turn (114) configured to be positioned in a recess being formed on the first and/or the second component (102) of the vehicle.

10. The grounding device (100) according to any of the preceding claims, the contact elements (108) being configured to be removably connected to at least one fixture (124) of the first and/or the second component (102).

11. The grounding device (100) according to any of the preceding claims, further comprising at least a solid metal part configured to conduct low frequency current.

12. The grounding device (100) according to claim 11, the solid metal part being formed as a separate spring element configured to provide an elastic expansion and/or an elastic compression in at least two dimensions.

13. The grounding device (100) according to claim 12, the separate spring element being formed as a wave spring (112).

14. A vehicle, comprising:
at least a first component (102), and a second component (102),
and
a grounding device (100) according to any of claims 1 to 13,
the grounding device (100) being configured to provide a conductive path, particularly a low impedance path, between at least the first component (102) and the second component (102).

15. A use of the grounding device (100) according to any of claims 1 to 13 for providing a conductive path between at least a first component (102) and a second component (102) of a vehicle, the conductive path being configured to conduct high frequency current.

## Patentansprüche

1. Eine Erdungsvorrichtung für ein Fahrzeug (100), die Folgendes umfasst:
ein Leitmittel (106) und zwei Kontaktelemente (108),
wobei ein erstes Kontaktelement der beiden Kontaktelemente (108) an einem ersten axialen Ende des Leitmittels (106) angeordnet ist und ein zweites Kontaktelement der beiden Kontaktelemente (108) an einem zweiten axialen Ende des Leitmittels (106) angeordnet ist,
wobei das erste Kontaktelement ferner so eingerichtet ist, dass es an einer ersten Komponente (102) des Fahrzeugs angebracht werden kann, und das zweite Kontaktelement ferner so eingerichtet ist, dass es an einer zweiten Komponente (102) des Fahrzeugs angebracht werden kann,
wobei
das Leitmittel (106) mindestens eine flache geflochtene Drahtanordnung (110) umfasst, die so eingerichtet ist, dass sie Hochfrequenzströme leitet; **dadurch gekennzeichnet, dass**
die flache geflochtene Drahtanordnung (110) der leitenden Mittel (106) zumindest teilweise als ein Federelement mit Federwindungen ausgebildet ist, wobei das Federelement in einer stabilen Form vorliegt, die so eingerichtet ist, dass es eine elastische Ausdehnung und eine elastische Kompression in mindestens zwei Dimensionen bereitstellt, während es verhindert, dass die flache geflochtene Drahtanordnung aufgrund mechanischer Belastungen verdreht und geschlungen wird.

2. Die Erdungsvorrichtung (100) nach Anspruch 1,
wobei das Federelement als Wellenfeder (112) ausgebildet ist.

3. Die Erdungsvorrichtung (100) nach Anspruch 1 oder 2,
umfassend ferner eine Ummantelung (116), die das Leitmittel (106) umschließt,
wobei die Ummantelung (116) so eingerichtet ist, dass sie das Leitmittel (106) vor Umwelteinflüssen, wie Luft, Wasser o. Ä., schützt.

4. Die Erdungsvorrichtung (100) nach Anspruch 3,
wobei die Ummantelung (116) ferner eine Opferanode (118) umschließt,
die dazu eingerichtet ist, einer Korrosion des Leitmittels (106) vorzubeugen.

5. Die Erdungsvorrichtung (100) nach Anspruch 3 oder 4,
wobei die Ummantelung (116) aus mindestens einem Metall oder Metalllegierungen ausgebildet ist.

6. Die Erdungsvorrichtung (100) nach Anspruch 3 oder 4,
wobei die Ummantelung (116) aus einem Kunststoff ausgebildet ist.

7. Die Erdungsvorrichtung (100) nach einem der vorhergehenden Ansprüche,
wobei die Kontaktelemente (108) als separate Elemente ausgebildet und leitfähig mit dem Leitmittel (106) verbunden sind.

8. Die Erdungsvorrichtung (100) nach einem der Ansprüche 1 bis 6,
wobei die Kontaktelemente (108) integraler Bestandteil des Leitmittels (106) sind

9. Die Erdungsvorrichtung (100) nach Anspruch 8,
wobei eines der Kontaktelemente (108) als Federwindung (114) ausgebildet ist,
die dazu eingerichtet ist, in einer an der ersten und/oder der zweiten Komponente (102) ausgebildeten Vertiefung positioniert zu werden.

10. Die Erdungsvorrichtung (100) nach einem der vorhergehenden Ansprüche,
wobei die Kontaktelemente (108) so eingerichtet sind, dass sie zumindest mit einer Befestigungsvorrichtung (124) der ersten und/oder der zweiten Komponente (102) abnehmbar verbunden werden können.

11. Die Erdungsvorrichtung (100) nach einem der vorhergehenden Ansprüche, umfassend ferner zumindest einen massiven Metallteil, der so eingerichtet ist, dass er Niederfrequenzströme leitet.

12. Die Erdungsvorrichtung (100) nach Anspruch 11,
wobei der massive Metallteil als separates Federelement ausgebildet ist,
das so eingerichtet ist, dass es eine elastische Ausdehnung und/oder eine elastische Kompression in mindestens zwei Dimensionen bereitstellt.

13. Die Erdungsvorrichtung (100) nach Anspruch 12,
wobei das separate Federelement als Wellenfeder (112) ausgebildet ist.

14. Ein Fahrzeug, umfassend:
zumindest eine erste Komponente (102) und eine zweite Komponente (102) sowie eine Erdungsvorrichtung (100) nach einem der Ansprüche 1 bis 13,
wobei die Erdungsvorrichtung (100) so eingerichtet ist, dass sie einen leitfähigen Pfad, insbesondere einen niederohmigen Pfad, zwischen zumindest der ersten Komponente (102) und der zweiten Komponente (102) bereitstellt.

15. Verwendung der Erdungsvorrichtung (100) nach einem der Ansprüche 1 bis 13
zum Bereitstellen eines leitfähigen Pfads zwischen zumindest einer ersten Komponente (102) und einer zweiten Komponente (102) eines Fahrzeugs,
wobei der leitfähige Pfad so eingerichtet ist, dass er Hochfrequenzströme leitet.

## Revendications

1. Dispositif de mise à la terre (100) pour un véhicule, comprenant :
un moyen conducteur (106) et deux éléments de contact (108), un premier élément de contact des deux éléments de contact (108) étant disposé à une première extrémité axiale du moyen conducteur (106) et un second élément de contact des deux éléments de contact (108) étant disposé à une seconde extrémité axiale du moyen conducteur (106),
le premier élément de contact étant en outre configuré pour être fixé à un premier composant (102) du véhicule, et le second élément de contact étant en outre configuré pour être fixé à un second composant (102) du véhicule,
dans lequel le moyen conducteur (106) comprend au moins un ensemble de fils tressés plats (110) configuré pour conduire des courants à haute fréquence ;
**caractérisé en ce que**
l'ensemble de fils tressés plats (110) du moyen conducteur (106) est formé au moins en partie comme un élément ressort ayant des spires de ressort, l'élément ressort étant dans une forme stable configurée pour fournir une expansion élastique et une compression élastique dans au moins deux dimensions tout en empêchant l'ensemble de fils tressés plats d'être tordu et bouclé en raison de charges mécaniques.

2. Dispositif de mise à la terre (100) selon la revendication 1, l'élément ressort étant formé comme un ressort ondulé (112).

3. Dispositif de mise à la terre (100) selon la revendication 1 ou 2, comprenant en outre un revêtement (116) entourant le moyen conducteur (106), le revêtement (116) étant configuré pour protéger le moyen conducteur (116) des influences environnementales, telles que l'air, l'eau, etc.

4. Dispositif de mise à la terre (100) selon la revendication 3, le revêtement (116) entourant en outre une anode sacrificielle (118) configurée pour empêcher la corrosion du moyen conducteur (106).

5. Dispositif de mise à la terre (100) selon la revendication 3 ou 4, le revêtement (116) étant formé d'au moins un métal ou d'alliages métalliques.

6. Dispositif de mise à la terre (100) selon la revendication 3 ou 4, le revêtement (116) étant formé d'une matière plastique.

7. Dispositif de mise à la terre (100) selon l'une quelconque des revendications précédentes, les éléments de contact (108) étant des éléments séparés et étant connectés de manière conductrice au moyen conducteur (106).

8. Dispositif de mise à la terre (100) selon l'une quelconque des revendications 1 à 6, les éléments de contact (108) étant formés d'un seul tenant avec le moyen conducteur (106).

9. Dispositif de mise à la terre (100) selon la revendication 8, les éléments de contact (108) étant l'une des spires de ressort (114) configurée pour être positionnée dans un évidement formé sur le premier et/ou le second composant (102) du véhicule.

10. Dispositif de mise à la terre (100) selon l'une quelconque des revendications précédentes, les éléments de contact (108) étant configurés pour être connectés de manière amovible à au moins un élément de fixation (124) du premier et/ou du second composant (102).

11. Dispositif de mise à la terre (100) selon l'une quelconque des revendications précédentes, comprenant en outre au moins une pièce métallique solide configurée pour conduire un courant à basse fréquence.

12. Dispositif de mise à la terre (100) selon la revendication 11, la pièce métallique solide étant formée comme un élément ressort séparé configuré pour fournir une expansion élastique et/ou une compression élastique dans au moins deux dimensions.

13. Dispositif de mise à la terre (100) selon la revendication 12, l'élément ressort séparé étant formé comme un ressort ondulé (112).

14. Véhicule comprenant :
au moins un premier composant (102) et un second composant (102), et
un dispositif de mise à la terre (100) selon l'une quelconque des revendications 1 à 13,
le dispositif de mise à la terre (100) étant configuré pour fournir un chemin conducteur, en particulier un chemin à faible impédance, entre au moins le premier composant (102) et le second composant (102).

15. Utilisation du dispositif de mise à la terre (100) selon l'une quelconque des revendications 1 à 13 pour fournir un chemin conducteur entre au moins un premier composant (102) et un second composant (102) d'un véhicule, le chemin conducteur étant configuré pour conduire un courant à haute fréquence.
